# EUROPEAN PATENT SPECIFICATION

(11) **EP 3 509 722 B1**
(45) Date of publication and mention of the grant of the patent: **08.11.2023**
(21) Application number: 17768853.8
(22) Date of filing: 04.09.2017
(51) Int. Cl.: B01D 53/06, B01D 53/86, F26B 23/02, F23G 7/07, B01J 20/28

(54) **APPARATUS FOR REMOVING ORGANIC VAPOURS FROM GASEOUS STREAMS**
VORRICHTUNG ZUM ENTFERNEN VON ORGANISCHEN DÄMPFEN AUS GASSTRÖMEN
APPAREIL D'ÉLIMINATION DE VAPEURS ORGANIQUES DE FLUX GAZEUX

(30) Priority: 09.09.2016 GB 201615306
(43) Date of publication of application: 17.07.2019
(73) Proprietor: McGee, Donald Richard, Darlington, Durham DL3 8BE (GB)
(72) Inventor: McGee, Donald Richard, Darlington, Durham DL3 8BE (GB)
(74) Representative: Murgitroyd & Company
(86) International application number: PCT/GB2017/052568
(87) International publication number: WO 2018/046900

(56) References cited:
- EP-A2- 1 930 065
- GB-A- 2 285 044
- JP-A- 2013 255 893

## Description

The present invention relates to an apparatus for removing organic vapours from gaseous streams. For example, the present invention relates to an apparatus for removing solvent vapours from the drying and curing of paints, lacquers, inks and other organic coatings.

Solvent vapours produced by the curing and drying of paints and inks are potentially flammable and toxic to persons who inhale or come into contact with such vapours. It is known to use catalytic infra-red heaters to provide the heat required to dry and cure paint. Catalytic infra-red heaters are advantageous because they do not require electric power to operate following an initial preheat period.

For example, passing an organic gas such as butane over a preheated platinum based catalyst in the presence of oxygen causes an exothermic reaction to produce carbon dioxide and water vapour, heating the catalyst to cause emission of infra-red radiation. The solvent vapours produced by paint, ink and solvent based coatings can be used in this process to heat the catalyst. Such solvent vapours may be known as volatile organic compounds (VOCs).

Catalytic infrared heaters are advantageous because they offer a flameless combustion of gasses without any harmful products of combustion. Also, the long or medium wave infrared energy emitted from the catalytic heaters is more readily absorbed by organic coatings and solvents than any other heat source.

A known apparatus using this process is described in GB 2285044B. It is desirable to improve the efficiency and VOC extraction capabilities of such known apparatuses whilst reducing cost.

Preferred embodiments of the present invention seek to overcome the disadvantages of the prior art.

According to an aspect of the present invention, there is provided an apparatus for removing volatile organic compounds (VOCs) from gaseous streams, the apparatus comprising the features of claim 1.

According to an aspect of the present invention, there is provided an apparatus for removing volatile organic compounds (VOCs) from gaseous streams, the apparatus comprising the features of claim 4.

The apparatus according to claim 1 provides the advantage of an apparatus that efficiently self-fuels a catalytic heating means to remove volatile organic compounds from air. By providing suction means to draw the exhaust VOC/air mixture across the catalysts of the catalytic heating means, this improves the efficiency of heating of the catalysts to both remove more VOCs and increase the heating effect on the filter means to release the VOCs.

By providing at least one movable filter, this enables one portion of the filter to be used to filter air whilst another portion is heated to release VOCs to be passed across the catalytic heating means and converted into a harmless mixture of water vapour and carbon dioxide. The filter can then be moved to repeat the heating process with a different portion of filter, whilst the cleaned portion of filter is used to filter air.

This provides the further advantage of a system for efficiently passing VOCs across the catalytic heating means.

In a preferred embodiment, the apparatus further comprises a second inlet to the recirculation duct through which filtered exhaust air can be introduced into the recirculation duct. This provides the advantage of a system for improving the heating effect of the catalytic heating means.

Said moveable filter means may comprise a laminated activated carbon cloth (ACC) belt disposed on rotation means, and wherein said laminated activated carbon cloth (ACC) belt is arranged in the flow of said VOC/air mixture such that said VOC/air mixture passes through two sides of said laminated activated carbon cloth (ACC) belt to produce an exhaust air flow.

The apparatus according to claim 4 provides the advantage that by cross-feeding an exhausted VOC/air mixture over plural sets of catalytic heaters, the efficiency of removal of VOCs from air is greatly increased. This leads to increased scrubbing of VOCs from air whilst minimal electrical or other power is required for the heating steps required to catalyse VOCs.

The apparatus may further comprise an outlet to atmosphere on an exhaust side of said second moveable filter.

The apparatus may further comprise at least one inlet for atmospheric air arranged to feed into the stream of said first or second exhaust VOC/air mixture.

Said first and/or second moveable filter may comprise a substantially cylindrical filter being arranged to rotate about its longitudinal axis.

This provides the advantage that the filter can be continuously moved to constantly remove VOCs from intake air and produce a concentrated stream of VOC laden air to be fed to the catalytic heating means.

Said first and/or second heating chamber may define a sector of the circular cross section of said substantially cylindrical filter.

This provides the advantage of a straightforward method of enabling construction of a heating chamber to accommodate a moveable filter that can be constantly moved in a process that does not require stoppage to refresh the filters.

Said first and/or second moveable filter may comprise a pair of substantially planar filters arranged to be alternately moved in and out of the respective said first or second heating chamber.

This provides the advantage that one filter can remain operational whilst the other is heated to provide VOCs to fuel the catalytic heating means.

Said first and second moveable filter may each comprise a pair of substantially planar filters arranged to be alternately moved in and out of the respective said first and second heating chambers, wherein a first pair of said substantially planar filters is arranged to remain stationary whilst a second pair of said substantially planar filters is alternated in and out of the respective heating chamber.

This provides the advantage that the respective pairs of planar filters can be alternately moved for example at quarter hour intervals to enable a continuous cycle that does not require stoppage to refresh filters.

The apparatus may further comprise labyrinth seals disposed between the respective heating chamber and each said pair of planar filters.

The apparatus may further comprise a pressurised air seal disposed between the respective heating chamber and each said pair of planar filters.

Preferred embodiments of the present invention will now be described, by way of example only and not in any limitative sense with reference the accompanying drawings in which:
Figure 1 is a schematic view of a first embodiment of an apparatus for removing volatile organic compounds (VOCs) from gaseous streams;
Figure 2 is a schematic view of a second embodiment of an apparatus for removing volatile organic compounds (VOCs) from gaseous streams; and
Figure 3 is a schematic view of a third embodiment of an apparatus for removing VOCs from gaseous streams.

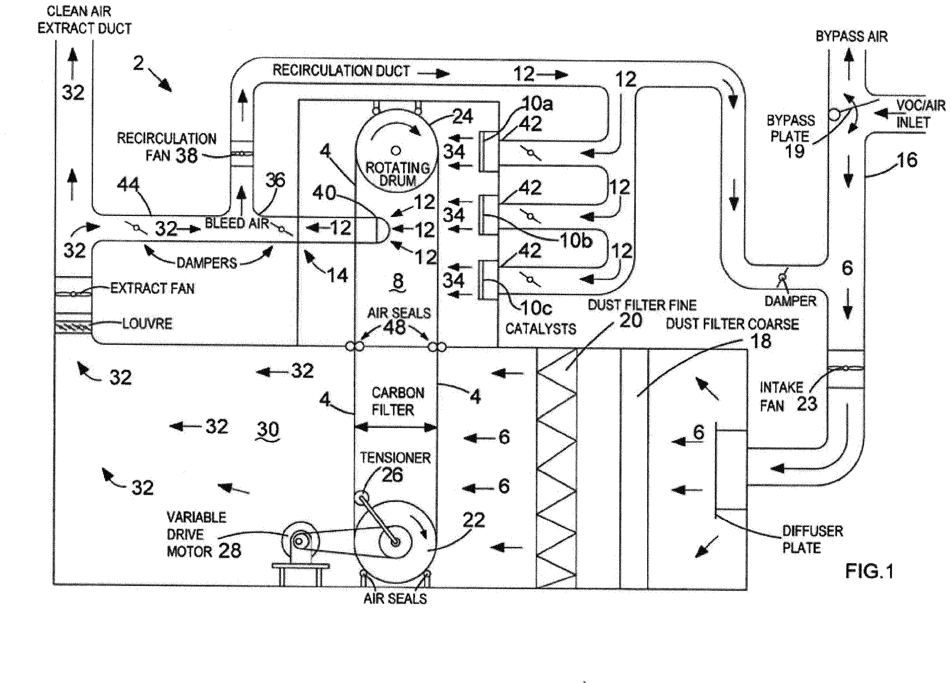

Referring to Figure 1, an apparatus 2 for removing volatile organic compounds (VOCs) from gaseous streams comprises at least one movable filter 4 arranged to capture VOCs from a VOC/air mixture 6 passed across the movable filter 4. A heating chamber 8 contains catalytic heating means 10. The movable filter 4 is movable into the heating chamber 8 to enable heating of a portion of the movable filter 4 by the catalytic heating means to releases VOCs to produce an exhaust VOC/air mixture 12. Suction means 14 is arranged to direct said exhaust VOC/air mixture 12 across the catalytic heating means 10 to cause heating thereof.

Moveable filter 4 comprises an activated carbon cloth (ACC) belt which can be formed from for example, Zorflex (Registered Trade Mark) ACC. The ACC materials can be varied in both depth and chemical makeup depending on the particular application in use. They can also be made in different grades of weave or in knotted form to allow for different mechanical properties which may be required and to regulate back pressures created in the gaseous streams. The ACC filter absorbs volatile organic compounds produced for example by the heating and curing of paint and hold the VOCs in the filter mesh until heated by catalytic heating means 10. The catalytic heating means preferably comprises platinum based catalysts.

The catalytic heating means 10 initially requires electricity to start and enter a pre-heat cycle. A donor fuel supply is also usually required to maintain the combustion process. Donor fuels such as natural gas, propane or butane are used. Once the heaters are started, the supply of electricity can be removed as the heating process is self-sustaining provided there is enough donor fuel being fed into the system.

The operation of apparatus 2 is as follows. VOC contaminated air, produced for example in a paint spray booth, is drawn by intake fan 23 into an intake duct 16 and is diverted by bypass plate 19 across first and second dust filters 18 and 20 to remove any particulates. The VOC/air mixture 6 then passes across the movable filter 4 which in the embodiment shown comprises an activated carbon cloth (ACC) belt disposed on rotating drums 22 and 24. A belt tensioner 26 maintains tension in the belt. The first rotating drum 22 is driven by variable drive motor 28 to periodically move the filter means 4 to cycle between different parts of the belt being either in heating chamber 8 or filtering chamber 30. Air seals 48 around the filter belt 4 isolate the heating chamber from the filtration chamber 30.

As the VOC/air mixture 6 passes across both sides of filter means 4, VOCs are trapped in the cloth of filter means 4 and filtered exhaust air 32 is produced. A VOC laden part of filter 4 is then moved into heating chamber 8 and heated by infra-red radiation 34 produced by the catalytic heating means 10 which in the embodiment shown comprises three catalysts 10a, 10b and 10c. The operation of such catalysts will be familiar to persons skilled in the art.

Heating the moveable filter 4 causes VOCs to be released from the filter cloth to create an exhaust VOC/air mixture 12. This is drawn into a suction means comprising recirculation duct 36 and recirculation fan 38. Inlet 40 of recirculation duct 36 is located inside the movable filter 4 such that recirculation fan 38 creates a negative pressure the inside of the moveable filter 4 in heating chamber 8. Several outlets 42 are provided in recirculation duct 36 and are positioned such that the exhaust VOC/air mixture is passed directly across the catalysts 10a, 10b and 10c of the catalytic heating means 10 to cause an exothermic reaction which converts VOCs and oxygen into infra-red energy, water vapour and carbon dioxide.

A second inlet 44 is provided to the recirculation duct 36 to enable filtered exhaust air 32 to be introduced and passed across catalytic heating means 10 to increase the amount of oxygen available for the exothermic reaction. Filtered air 32 is also exhausted to the atmosphere at extraction duct 46.

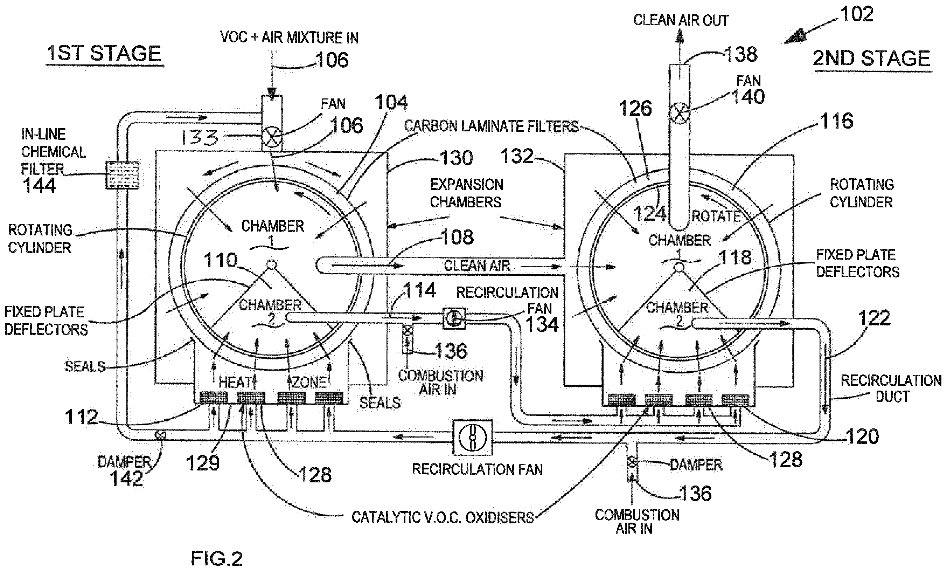

Referring to Figure 2, a second embodiment of an apparatus 102 for removing volatile organic compounds (VOCs) from gaseous streams is shown. The apparatus 102 comprises a first moveable filter 104 arranged to capture VOCs from a VOC/air mixture 106 passed across the first moveable filter 104 to produce filtered exhaust air 108. A first heating chamber 110 comprises catalytic heating means 112. The first moveable filter 104 is moveable into the heating chamber 110 to enable a portion of filter 104 to be heated by the catalytic heating means 112 to release VOCs from the moveable filter 104 to produce a first exhaust VOC/air mixture 114.

A second moveable filter 116 is arranged in the path of filtered exhaust air 108 to capture remaining VOCs therefrom. Second heating chamber 118 comprises a second catalytic heating means 120, the second moveable filter 116 being moveable into the second heating chamber 118 to enable heating of the second moveable filter means 116 to release VOCs to produce a second exhaust VOC/air mixture 122. The first exhaust VOC/air mixture 114 is passed across the second catalytic heating means 120 to cause heating thereof and said second exhaust VOC/air mixture 122 is passed across the first catalytic heating means 112 to cause heating of catalysts 128.

The catalytic heating means 112 and 120 initially require electricity to start and enter a pre-heat cycle. A donor fuel supply 129 is also usually required to maintain the combustion process. Donor fuels such as natural gas, propane or butane are used. Once the heaters are started, the supply of electricity can be removed as the heating process is self-sustaining provided there is enough donor fuel being fed into the system.

The first and second moveable filters 104 and 116 comprise cylindrical rotating cylinders formed from wire mesh filters 124 on which various grade and weaves of laminated activated carbon cloth (ACC) filters 126 are disposed. As a part of the cylindrical filter of the first moveable filter 104 rotates into the first heating chamber 110, VOCs absorbed in the filter mesh are released as a result of radiant heat produced by the first catalytic heating means 112 to form first exhaust VOC/air mixture 114 which using suction means comprising recirculation fan 134 is drawn across the second catalytic heating means 120 to produce radiant heat for the second heating chamber 118.

A second stage is provided by passing exhaust air 108 through the cylindrical filter of the second moveable filter 116. VOCs contained in exhaust air 108 are held by the second moveable filter means 116 and released by heating in the second heating chamber 118 to form a second exhaust VOC/air mixture 122 which is drawn by suction means across the first catalytic heating means 112 to produce radiant heat. This two stage process therefore cross-feeds VOC/air mixtures to heat two sets of catalytic heaters 112 and 120.

The operation of apparatus 102 of Figure 2 will now be described. VOC laden air 106 produced for example by the heating and curing of paint enters first expansion chamber 130 under pressure from intake fan 133. The gas stream 106 is passed through the cylindrical filter of the first moveable filter 104 which removes VOCs from the air stream.

Exhaust air 108 exits and is passed into second expansion chamber 132.

As the first cylindrical filter rotates, the portion containing VOCs held in the ACC mesh moves into first heating chamber 110. Radiant heat produced by first catalytic heaters 112 causes the VOCs to be released from the ACC mesh and a concentrated stream of air containing VOCs 114 is drawn out by recirculation fan 134 and passed across the second set of catalytic heaters 120. Inlet feeds 136 are provided to supply atmospheric air to aid combustion in the VOC/air mixture lines. Dampers may be provided in the inlet feeds.

Exhaust air 108 is at the same time drawn across the cylindrical filter of the second moveable filter 116 which removes remaining VOCs to be held in the ACC mesh of the rotating cylinder. The VOC laden portions of the mesh are then moved into the second heating zone 118 which heats the filter by radiant heat produced by the second catalytic heating means 120 which is fuelled by the VOC/air mixture 14 produced in the first heating chamber 110. This produces the second VOC/air mixture 122 which is passed back across the first catalytic heating means 112.

Clean air is exhausted by outlet 138 under the pressure of fan 140. A series of dampers 142 are used to pressure balance the system and an inline chemical filter 144 passes surplus recirculation air back into the intake duct. Inline chemical filter 114 is used to clean any residual gases created by the oxidation process of the catalytic heaters.

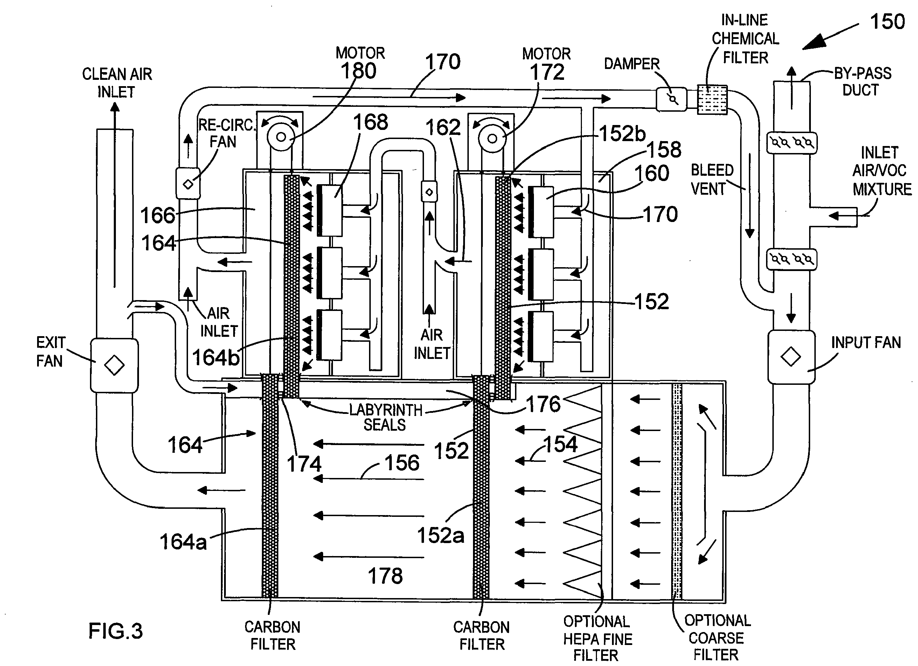

Referring to Figure 3, a third embodiment of the present invention will now be described. Many of the features of the air circuit of the third embodiment of Figure 3 are similar to those of the Figure 2 embodiment, the main difference being the construction and shape of the first and second stage filters.

Referring to Figure 3, an apparatus 150 for removing VOCs from a gas stream comprises first moveable filter 152 arranged to capture VOCs from a VOC/air mixture 154 passed across the first moveable filter 152 to produce filtered exhaust air 156. A first heating chamber 158 in which a first catalytic heating means 160 is arranged is provided into which said first moveable filter 152 is moveable to be heated to release VOCs to produce a first exhaust VOC/air mixture 162.

A second moveable filter 164 is arranged in the path of filtered exhaust air 156 to capture VOCs therefrom. A second heating chamber 166 in which a second catalytic heating means 168 is arranged such that second moveable filter 164 is moveable into the second heating chamber 168 to be heated and released VOCs to produce a second VOC/air mixture 170. The first exhaust VOC/air mixture 162 is passed across the second catalytic heating means 168 to cause heating thereof and the second VOC/air mixture 170 is passed across the first catalytic heating means 160 to cause heating thereof.

The first moveable filter comprises two substantially planar filters 152a and 152b formed from mesh and ACC similar to the filters of the second embodiment. The first and second filter elements 152a and 152b are arranged to be slidably moved in and out of the first heating chamber 158 by use of motor 172. Labyrinth seals 174 and an air seal 176 are provided to isolate the heating chambers 158 and 166 from the filtration expansion chamber 178.

The second moveable filter 164 comprises first and second moveable planar filters 164a and 164b moveable by means of a motor 180 in the same manner as the first set of planar filters. The third embodiment 150 therefore operates in substantially the same manner as the second embodiment of Figure 2, the difference being the shape of construction and method of movement of the filters. The first set of filters 152a and 152b are arranged to be moved at different times to second filters 164a and 164b. For example, the first set of filters might switch over between the first heating chamber 158 and expansion chamber 178 at a time interval of for example, 15 minutes when the second filter 164a and 164b are switched.

The cross-feeding of the VOC/air mixture outputs from VOCs exhausted from the filters operates the catalytic heating means 160 and 168 in substantially the same manner as the second embodiment.

It should also be understood that the first embodiment of Figure 1 has been shown single filtration stage for the purposes of clarity. It is envisaged that a second stage comprising a second moveable filter 4 and second heating chamber 8, and the cross feeding technology disclosed above in the second and third embodiments of Figures 2 and 3 could be added to the Figure 1 embodiment.

It will be appreciated by persons skilled in the art that the above embodiments have been described by way of example only and not in any limitative sense, and that various alterations and modifications are possible without departure from the scope of the invention as defined by the appended claims.

## Claims

1. An apparatus (2) for removing volatile organic compounds (VOCs) from gaseous streams, the apparatus comprising:
at least one moveable filter (4) arranged to capture VOCs from a VOC/air mixture (6) passed across said at least one moveable filter;
at least one heating chamber (8) in which a catalytic heating means (10) is arranged, said at least one moveable filter moveable into said at least one heating chamber to enable heating of a portion of said at least one moveable filter to release VOCs to produce an exhaust VOC/air mixture (12); and
suction means (14) arranged to direct said exhaust VOC/air mixture (12) across said catalytic heating means to cause heating thereof;
**characterised in that** said suction means comprises:
a recirculation duct (36) having a first inlet disposed inside said at least one moveable filter (4) and at least one outlet (42);
at least one recirculation fan arranged to draw said exhaust VOC/air mixture (12) into said first inlet (40); and
wherein at least one said outlet (42) is arranged to channel said exhaust VOC/air mixture (12) across said catalytic heating means.

2. An apparatus according to claim 1, further comprising a second inlet (44) to the recirculation duct through which filtered exhaust air (32) can be introduced into the recirculation duct.

3. An apparatus according to any one of the preceding claims, wherein said moveable filter means comprises a laminated activated carbon cloth (ACC) belt disposed on rotation means (22, 24), and wherein said laminated activated carbon cloth (ACC) belt is arranged in the flow of said VOC/air mixture such that said VOC/air mixture passes through two sides of said laminated activated carbon cloth (ACC) belt to produce an exhaust air flow.

4. An apparatus (102, 150) for removing volatile organic compounds (VOCs) from gaseous streams, the apparatus comprising:
a first moveable filter (104, 152) arranged to capture VOCs from a VOC/air mixture (106, 154) passed across said first moveable filter to produce filtered exhaust air (108, 156);
a first heating chamber (110, 158) in which a first catalytic heating means (112, 160) is arranged, said first moveable filter moveable into said first heating chamber to enable heating of a portion of said first moveable filter to release VOCs to produce a first exhaust VOC/air mixture (114, 162);
a second moveable filter (116, 164) arranged in the path of said filtered exhaust air (108, 156) to capture VOCs therefrom;
a second heating chamber (118, 166) in which a second catalytic heating means (120, 168) is arranged, said second moveable filter moveable into said second heating chamber to enable heating of a portion of said second moveable filter to release VOCs to produce a second exhaust VOC/air mixture (122, 170);
wherein said first exhaust VOC/air mixture (114, 162) is passed across said second catalytic heating means (120, 168) to cause heating thereof, the apparatus further comprising a recirculation duct and recirculation fan for passing at least a part of said second exhaust VOC/air mixture (122, 170) across said first catalytic heating means to cause heating thereof.

5. An apparatus according to claim 4, further comprising an outlet (138) to atmosphere on an exhaust side of said second moveable filter.

6. An apparatus according to any one of claims 4 or 5, further comprising at least one inlet for atmospheric air arranged to feed into the stream of said first or second exhaust VOC/air mixture.

7. An apparatus according to any one of claims 4 to 6, wherein said first and/or second moveable filter comprises a cylindrical filter being arranged to rotate about its longitudinal axis.

8. An apparatus according to claim 7, wherein said first and/or second heating chamber defines a sector of the circular cross section of said cylindrical filter.

9. An apparatus according to any one of claims 4 to 6, wherein said first and/or second moveable filter comprises a pair of planar filters (152, 154) arranged to be alternately moved in and out of the respective said first or second heating chamber.

10. An apparatus according to claim 9, further comprising labyrinth seals (174) disposed between the respective heating chamber and each said pair of planar filters.

11. An apparatus according to claim 9, further comprising a pressurised air seal (176) disposed between the respective heating chamber and each said pair of planar filters.

## Patentansprüche

1. Eine Vorrichtung (2) zum Entfernen von flüchtigen organischen Verbindungen (VOCs, Volatile Organic Compounds) aus Gasströmen, wobei die Vorrichtung Folgendes beinhaltet:
mindestens ein bewegbares Filter (4), das dazu angeordnet ist, VOCs aus einem VOC-Luft-Gemisch (6), das über das mindestens eine bewegbare Filter geführt wird, einzufangen;
mindestens eine Heizkammer (8), in der ein katalytisches Heizmittel (10) angeordnet ist, wobei das mindestens eine bewegbare Filter in die mindestens eine Heizkammer bewegt werden kann, um das Erhitzen eines Abschnitts des mindestens einen bewegbaren Filters zu ermöglichen, um VOCs freizusetzen, um ein VOC-Luft-Auslassgemisch (12) zu produzieren; und
ein Saugmittel (14), das dazu angeordnet ist, das VOC-Luft-Auslassgemisch (12) über das katalytische Heizmittel zu leiten, um dessen Erhitzen zu bewirken;
**dadurch gekennzeichnet, dass** das Saugmittel Folgendes beinhaltet:
eine Rezirkulationsleitung (36), die einen ersten Eintritt, der innerhalb des mindestens einen bewegbaren Filters (4) eingerichtet ist, und mindestens einen Austritt (42) aufweist;
mindestens ein Rezirkulationsgebläse, das dazu angeordnet ist, das VOC-Luft-Auslassgemisch (12) in den ersten Eintritt (40) zu ziehen; und
wobei der mindestens eine Austritt (42) dazu angeordnet ist, das VOC-Luft-Auslassgemisch (12) über das katalytische Heizmittel zu lenken.

2. Vorrichtung gemäß Anspruch 1, die ferner einen zweiten Eintritt (44) zu der Rezirkulationsleitung beinhaltet, durch den gefilterte Auslassluft (32) in die Rezirkulationsleitung eingeführt werden kann.

3. Vorrichtung gemäß einem der vorhergehenden Ansprüche, wobei das bewegbare Filtermittel ein laminiertes Aktivkohlegewebe(ACC, Activated Carbon Cloth)-Band beinhaltet, das auf einem Drehmittel (22, 24) eingerichtet ist, und wobei das laminierte Aktivkohlegewebe(ACC)-Band in dem Strom des VOC-Luft-Gemisches derart angeordnet ist, dass das VOC-Luft-Gemisch durch zwei Seiten des laminierten Aktivkohlegewebe(ACC)-Bands geführt wird, um einen Auslassluftstrom zu produzieren.

4. Vorrichtung (102, 150) zum Entfernen von flüchtigen organischen Verbindungen (VOCs) aus Gasströmen, wobei die Vorrichtung Folgendes beinhaltet:
ein erstes bewegbares Filter (104, 152), das dazu angeordnet ist, VOCs aus einem VOC-Luft-Gemisch (106, 154), das über das erste bewegbare Filter geführt wird, einzufangen, um gefilterte Auslassluft (108, 156) zu produzieren;
eine erste Heizkammer (110, 158), in der ein erstes katalytisches Heizmittel (112, 160) angeordnet ist, wobei das erste bewegbare Filter in die erste Heizkammer bewegt werden kann, um das Erhitzen eines Abschnitts des ersten bewegbaren Filters zu ermöglichen, um VOCs freizusetzen, um ein erstes VOC-Luft-Auslassgemisch (114, 162) zu produzieren;
ein zweites bewegbares Filter (116, 164), das in dem Weg der gefilterten Auslassluft (108, 156) angeordnet ist, um VOCs daraus einzufangen;
eine zweite Heizkammer (118, 166), in der ein zweites katalytisches Heizmittel (120, 168) angeordnet ist, wobei das zweite bewegbare Filter in die zweite Heizkammer bewegt werden kann, um das Erhitzen eines Abschnitts des zweiten bewegbaren Filters zu ermöglichen, um VOCs freizusetzen, um ein zweites VOC-Luft-Auslassgemisch (122, 170) zu produzieren;
wobei das erste VOC-Luft-Auslassgemisch (114, 162) über das zweite katalytische Heizmittel (120, 168) geführt wird, um das Erhitzen davon zu bewirken, wobei die Vorrichtung ferner eine Rezirkulationsleitung und ein Rezirkulationsgebläse beinhaltet, um mindestens einen Teil des zweiten VOC-Luft-Auslassgemisches (122, 170) über das erste katalytische Heizmittel zu führen, um dessen Erhitzen zu bewirken.

5. Vorrichtung gemäß Anspruch 4, die ferner einen Austritt (138) in die Atmosphäre auf einer Auslassseite des zweiten bewegbaren Filters beinhaltet.

6. Vorrichtung gemäß einem der Ansprüche 4 oder 5, die ferner mindestens einen Eintritt für atmosphärische Luft beinhaltet, der zum Einspeisen in den Strom des ersten oder des zweiten VOC-Luft-Auslassgemisches angeordnet ist.

7. Vorrichtung gemäß einem der Ansprüche 4 bis 6, wobei das erste und/oder das zweite bewegbare Filter ein zylindrisches Filter beinhalten, das dazu angeordnet ist, sich um seine Längsachse zu drehen.

8. Vorrichtung gemäß Anspruch 7, wobei die erste und/oder die zweite Heizkammer einen Sektor des kreisförmigen Querschnitts des zylindrischen Filters definieren.

9. Vorrichtung gemäß einem der Ansprüche 4 bis 6, wobei das erste und/oder das zweite bewegbare Filter ein Paar Planarfilter (152, 154) beinhalten, das dazu angeordnet ist, abwechselnd in die erste bzw. die zweite Heizkammer hinein und daraus heraus bewegt zu werden.

10. Vorrichtung gemäß Anspruch 9, die ferner Labyrinthdichtungen (174) beinhaltet, die zwischen der jeweiligen Heizkammer und jedem Paar Planarfilter eingerichtet sind.

11. Vorrichtung gemäß Anspruch 9, die ferner eine Druckluftdichtung (176) beinhaltet, die zwischen der jeweiligen Heizkammer und jedem Paar Planarfilter eingerichtet ist.

## Revendications

1. Un appareil (2) servant à retirer des composés organiques volatils (COV) de courants gazeux, l'appareil comprenant :
au moins un filtre déplaçable (4) agencé pour capturer des COV provenant d'un mélange COV/air (6) passé d'un côté à l'autre dudit au moins un filtre déplaçable ;
au moins une chambre chauffante (8) dans laquelle un moyen chauffant catalytique (10) est agencé, ledit au moins un filtre déplaçable étant déplaçable jusque dans ladite au moins une chambre chauffante pour permettre la chauffe d'une portion dudit au moins un filtre déplaçable afin de libérer des COV pour produire un mélange COV/air d'échappement (12) ; et
un moyen de succion (14) agencé pour diriger ledit mélange COV/air d'échappement (12) d'un côté à l'autre dudit moyen chauffant catalytique afin d'entraîner la chauffe de celui-ci ;
**caractérisé en ce que** ledit moyen de succion comprend :
un conduit de recirculation (36) muni d'une première admission disposée à l'intérieur dudit au moins un filtre déplaçable (4) et d'au moins une évacuation (42) ;
au moins un ventilateur de recirculation agencé pour aspirer ledit mélange COV/air d'échappement (12) jusque dans ladite première admission (40) ; et
où au moins une dite évacuation (42) est agencée pour canaliser ledit mélange COV/air d'échappement (12) d'un côté à l'autre dudit moyen chauffant catalytique.

2. Un appareil selon la revendication 1, comprenant en outre une deuxième admission (44) vers le conduit de recirculation à travers laquelle de l'air d'échappement filtré (32) peut être introduit jusque dans le conduit de recirculation.

3. Un appareil selon l'une quelconque des revendications précédentes, où ledit moyen filtrant déplaçable comprend une courroie en tissu de carbone actif (ACC) stratifié disposée sur un moyen de rotation (22, 24), et où ladite courroie en tissu de carbone actif (ACC) stratifié est agencée dans le flux dudit mélange COV/air de telle sorte que ledit mélange COV/air passe à travers deux côtés de ladite courroie en tissu de carbone actif (ACC) stratifié afin de produire un flux d'air d'échappement.

4. Un appareil (102, 150) servant à retirer des composés organiques volatils (COV) de courants gazeux, l'appareil comprenant :
un premier filtre déplaçable (104, 152) agencé pour capturer des COV provenant d'un mélange COV/air (106, 154) passé d'un côté à l'autre dudit premier filtre déplaçable afin de produire de l'air d'échappement filtré (108, 156) ;
une première chambre chauffante (110, 158) dans laquelle un premier moyen chauffant catalytique (112, 160) est agencé, ledit premier filtre déplaçable étant déplaçable jusque dans ladite première chambre chauffante pour permettre la chauffe d'une portion dudit premier filtre déplaçable afin de libérer des COV pour produire un premier mélange COV/air d'échappement (114, 162) ;
un deuxième filtre déplaçable (116, 164) agencé dans le trajet dudit air d'échappement filtré (108, 156) pour capturer des COV provenant de celui-ci ;
une deuxième chambre chauffante (118, 166) dans laquelle un deuxième moyen chauffant catalytique (120, 168) est agencé, ledit deuxième filtre déplaçable étant déplaçable jusque dans ladite deuxième chambre chauffante pour permettre la chauffe d'une portion dudit deuxième filtre déplaçable afin de libérer des COV pour produire un deuxième mélange COV/air (122, 170) ;
où il est fait passer ledit premier mélange COV/air d'échappement (114, 162) d'un côté à l'autre dudit deuxième moyen chauffant catalytique (120, 168) pour entraîner la chauffe de celui-ci, l'appareil comprenant en outre un conduit de recirculation et un ventilateur de recirculation pour faire passer au moins une partie dudit deuxième mélange COV/air d'échappement (122, 170) d'un côté à l'autre dudit premier moyen chauffant catalytique afin d'entraîner la chauffe de celui-ci.

5. Un appareil selon la revendication 4, comprenant en outre une évacuation (138) vers l'atmosphère sur un côté d'échappement dudit deuxième filtre déplaçable.

6. Un appareil selon l'une quelconque des revendications 4 ou 5, comprenant en outre au moins une admission d'air atmosphérique agencée pour alimenter le courant dudit premier ou deuxième mélange COV/air d'échappement.

7. Un appareil selon l'une quelconque des revendications 4 à 6, où ledit premier et/ou deuxième filtre déplaçable comprend un filtre cylindrique qui est agencé pour tourner autour de son axe longitudinal.

8. Un appareil selon la revendication 7, où ladite première et/ou deuxième chambre chauffante définit un secteur de la section transversale circulaire dudit filtre cylindrique.

9. Un appareil selon l'une quelconque des revendications 4 à 6, où ledit premier et/ou deuxième filtre déplaçable comprend une paire de filtres plans (152, 154) agencés pour être déplacés alternativement dans et hors de ladite première ou deuxième chambre chauffante respective.

10. Un appareil selon la revendication 9, comprenant en outre des joints d'étanchéité à labyrinthe (174) disposés entre la chambre chauffante respective et chaque filtre de ladite paire de filtres plans.

11. Un appareil selon la revendication 9, comprenant en outre un joint d'étanchéité à l'air sous pression (176) disposé entre la chambre chauffante respective et chaque filtre de ladite paire de filtres plans.
